# EUROPEAN PATENT SPECIFICATION

(11) **EP 2 729 545 B1**
(45) Date of publication and mention of the grant of the patent: **04.09.2019**
(21) Application number: 12808153.6
(22) Date of filing: 03.07.2012
(51) Int. Cl.: C09D 175/04, C03C 17/32

(54) **FREE RADICAL CURABLE WATERBORNE GLASS COATING COMPOSITIONS**
DURCH FREIE RADIKALE HÄRTBARE WÄSSRIGE GLASBESCHICHTUNGSZUSAMMENSETZUNGEN
COMPOSITIONS DE REVÊTEMENT DE VERRE AQUEUSES POLYMÉRISABLES PAR VOIE RADICALAIRE

(30) Priority: 06.07.2011 US 201161504781 P
(43) Date of publication of application: 14.05.2014
(73) Proprietor: Covestro LLC, Pittsburgh, PA 15205 (US); Covestro Deutschland AG, 51373 Leverkusen (DE)
(72) Inventor: EKIN, Abdullah, Imperial, PA 15125 (US); SUBRAMANIAN, Ramesh, Coraopolis, PA 15108 (US); SOMMER, Stefan, 51365 Leverkusen (DE); NENNEMANN, Arno, 51469 Bergisch-Gladbach (DE); MEBANE, Christine, Braddock, PA 15104 (US)
(74) Representative: Levpat
(86) International application number: PCT/US2012/045382
(87) International publication number: WO 2013/006606

(56) References cited:
- US-A- 5 334 690
- US-A- 5 684 081
- US-A1- 2001 029 272
- US-A1- 2010 222 448
- US-A1- 2011 045 219
- US-B2- 6 960 639

## Description

### TECHNICAL FIELD

This disclosure relates to one-component free-radical curable waterborne polyurethane coating compositions and to the use of such compositions for coating glass substrates.

### BACKGROUND

Glass substrates may be coated, for example, to provide a decorative effect or to enhance substrate properties. For instance, glass substrates may be coated to provide anti-shattering properties, abrasion resistance, increased elasticity, solvent resistance, and/or alkali resistance. Glass containers, for example, may benefit from clear coatings that provide mechanical protection to the external surfaces to help minimize mechanical damage, such as scuffing or marring, to the containers during transportation, storage, filling operations, and distribution. In addition, glass containers may be coated to increase the aesthetics of the glass containers. Free radical cure using radiation and/or thermal energy increases the line speeds of glass decoration operations. US 5 684 081 discloses a polyurethane coating composition comprising a free radically curable polyurethane resin. However, said coating composition lacks a non-functional polycarbonate-polyurethane resin. US 2011/045219 discloses a polycarbonate-polyurethane resin which may be non-functional. However, neither document discloses the particular mixture of both components which achieves a superior cross-hatch adhesion.

### SUMMARY

Embodiments disclosed in this specification are directed to free radical curable aqueous polyurethane coating compositions. The free radical curable aqueous polyurethane coating compositions comprise a waterborne unsaturated polyurethane resin, and a polycarbonate-polyurethane resin.

In various embodiments, an aqueous polyurethane coating composition comprises: (a) a water-dilutable ethylenically unsaturated polyurethane resin; and (b) a water-dilutable polycarbonate-polyurethane resin. The water dilutable ethylenically unsaturated polyurethane resin (a) comprises a reaction product of: (A1) 40-90% of one or more ethylenically unsaturated prepolymers containing hydroxyl groups and having an OH content of 20-350 mg of KOH/g and (B1) 0.1-20 wt% of one or more mono- and/or difunctional compounds reactive towards isocyanate groups, which compounds contain ionic or potentially ionic groups and/or have a dispersant action due to non-ionic groups with (C1) 10-50 wt% of one or more polyisocyanates (D1) 0.0-30 wt% of polyols together with a subsequent reaction with 0.1-10 wt% of one or more di- and/or polyamines; wherein components (a) and (b) are present in a weight ratio between 90:10 and 50:50 measured on a solids basis. The polycarbonate-polyurethane resin (b) is non-functional.

It is understood that the invention disclosed and described in this specification is not limited to the embodiments summarized in this Summary.

### DESCRIPTION

Various embodiments are described and illustrated in this specification to provide an overall understanding of the structure, function, operation, manufacture, and use of the disclosed products and processes. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification The various embodiments disclosed and described in this specification can comprise, consist of, or consist essentially of the features and characteristics as variously described herein.

The grammatical articles "one", "a", "an", and "the", as used in this specification, are intended to include "at least one" or "one or more", unless otherwise indicated. Thus, the articles are used in this specification to refer to one or more than one (*i.e.*, to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

The various embodiments disclosed and described in this specification provide free radical curable waterborne (*i.e.*, aqueous) polyurethane coating compositions that exhibit properties beneficial for substrates such as, for example, glass substrates. The free radical curable aqueous polyurethane coating compositions disclosed herein provide cured coating films exhibiting increased flexibility, increased impact resistance, good substrate adhesion in severe environments, increased abrasion resistance and increased solvent resistance. The free radical curable aqueous polyurethane coating compositions provide beneficial properties to substrates such as, for example, glass substrates.

One-component coating compositions comprise pre-mixed compositions that have acceptable pot-life and storage stability, and are applied to substrates and cured under specific conditions such as, for example, upon exposure to thermal energy, electron beam or ultraviolet light. One-component systems include, for example, all the components of the formulation being mixed together and are stable until heat and/or radiation is applied to the formulation. In contrast, two-component coating compositions comprise two separate and mutually reactive components that are mixed immediately prior to application to substrate. The separate components respectively contain ingredients that are reactive under ambient conditions and that begin appreciable formation of cured resin immediately upon mixture. Therefore, the two components must remain separated until immediately before application due to limited pot-life.

The water-dilutable, ethylenically unsaturated polyurethane resins are based on acrylate prepolymers containing hydroxyl groups. The water-dilutable, ethylenically unsaturated polyurethane resins according to the invention are produced by polyaddition of (A1). 40-90 wt. %, preferably 50-80 wt. %, of one or more acrylate prepolymers containing hydroxyl groups and having an OH content of 20-350 mg, preferably 40-120 mg of KOH/g and (B1). 0.1-20 wt. %, preferably 2-15 wt. %, of one or more mono- and/or difunctional compounds reactive towards isocyanate groups, which compounds contain groups which are cationic, anionic and/or have a dispersant action due to ether groups with (C1). 10-50 wt. %, preferably 15-40 wt. % of one or more polyisocyanates (D1). 0.0-30 wt. %, preferably 0.0-20 wt. % of a polyol together with a subsequent reaction with (E1). 0.1-10 wt. %, preferably 0.5-7 wt. %, of one or more di- and/or polyamines.

The water-dilutable, ethylenically unsaturated polyurethane resins according to the invention are used as lacquer binders.

The acrylate prepolymers (A1) may be polyester acrylate prepolymers, polyether acrylate prepolymers, or polycarbonate acrylate prepolymers containing hydroxyl groups. Alternatively, it is also possible to use polyepoxy acrylate prepolymers containing hydroxyl groups or polyurethane acrylate prepolymers containing hydroxyl groups. In one embodiment, mixtures of the above-mentioned prepolymers may be used.

Polyester acrylate prepolymers are polycondensation products derived from polycarboxylic or if available the anhydrides thereof (adipic acid, sebacic acid, maleic anhydride, fumaric acid and phthalic acid may be cited by way of example), di- and/or more highly functional polyols (such as for example ethylene glycol, propylene glycol, neopentyl glycol, trimethylolpropane, pentaerythrite, alkoxylated di- or polyols etc.) and acrylic and/or methacrylic acid. After polycondensation, excess carboxyl groups may be reacted with epoxides. Production of the polyester acrylate prepolymers A containing hydroxyl groups is described in U.S.-PS-42 06 205, DE-OS-40 40 290, DE-OS-33 16 592, DE-OS-37 04 098 and UV & EB Curing Formulations for Printing Inks, Coatings & Paints, ed. R. Holman and P. Oldring, published by SITA Technology, London (England), 1988, pages 36 et seq.. The reactions should be terminated once the OH value is within the range from 40-120 mg of KOH/g.

Compounds (B1) which have a dispersant action effected cationically, anionically and/or by ether groups are those containing, for example, sulphonium, ammonium, carboxylate, sulphonate and/or polyether groups and are incorporated into the macromolecule by the presence of isocyanate-reactive groups. Preferred suitable isocyanate-reactive groups are hydroxyl and amine groups. Representatives of compounds (B1) are bis(hydroxymethyl)propionic acid, malic acid, glycolic acid, lactic acid, glycine, alanine, taurine, 2-aminoethylaminoethanesulphonic acid, polyethylene glycols and polypropylene glycols started on alcohols. Bis(hydroxymethyl) propionic acid and polyethylene glycol 750 monomethyl ether are particularly suitable.

Polyaddition may proceed with aromatic, araliphatic, aliphatic or cycloaliphatic polyisocyanates (C1). Mixtures of such polyisocyanates (C1) may also be used. Examples of suitable polyisocyanates (C1) are tetramethylene diisocyanate, hexamethylene diisocyanate, 2,3,3-trimethylhexamethylene diisocyanate, 1,4-cyclohexylene diisocyanate, 4,4-dicyclohexylmethane diisocyanate, isophorone diisocyanate, 1,4-phenylene diisocyanate, 2,6-tolylene diisocyanate, 1,5-naphthylene diisocyanate, 2,4- or 4,4'-diphenylmethane diisocyanate, triphenylmethane 4,4',4"-triisocyanate, together with polyisocyanates produced by the trimerization or oligomerization of diisocyanates or by the reaction of diisocyanates with polyfunctional compounds containing hydroxyl or amine groups. Such compounds include the isocyanurate of hexamethylene diisocyanate. Further suitable compounds are blocked, reversibly capped polydisisocyanates, such as 1,3,5-tris-6-(1-methylpropylidene aminoxy carbonylamino)hexyl-2,4,6-trioxo-hexahydro-1,3,5-triazine. Hexamethylene diisocyanate and isophorone diisocyanate and the mixtures thereof are particularly preferred.

As polyols (D1) it is possible to use substances with a molecular weight up to 5000. Such polyols are e.g. propylene glycol, ethylene glycol, neopentyl glycol, 1,6-hexane diol. Examples for higher molecular weight polyols are the well-known polyesterpolyols, polyetherpolyols and polycarbonatepolyols which should have an average OH-functionality of 1.8-2,2. If appropriate it is also possible to use monofunctional alcohols such as ethanol and butanol.

Di- and/or polyamines (E1) are used to increase molecular weight. Since this reaction proceeds in the aqueous medium, the di- and/or polyamines (E1) must be more reactive towards the isocyanate groups than is water. Compounds which may be cited by way of example are ethylenediamine, 1,6-hexamethylenediamine, isophoronediamine, 1,3- and 1,4-phenylenediamine, 4,4'-diphenylmethanediamine, aminofunctional polyethylene oxide esp. polypropylene oxide (known as Jeffamine®, D-series), triethylenetetramine and hydrazine. Ethylenediamine is particularly preferred.

It is also possible to add certain proportions of monoamines, and as for example butylamine, ethylamine and amines of the Jeffamine® M series-aminofunctional polyethylene oxides and polypropylene oxides.

The water-dilutable, ethylenically unsaturated polyurethane resins according to the invention may be produced using any known prior art methods, such as emulsifier/shear force, acetone, prepolymer mixing, melt/emulsification, ketimine and solid spontaneous dispersion methods or derivatives thereof (c.f. Methoden der Organischen Chemie, Houben-Weyl, 4th edition, volume E20/part 2, page 1682, Georg Thieme Verlag, Stuttgart, 1987). Experience has shown that the acetone method is the most suitable.

Components (A1), (B1) and (D1) are initially introduced into the reactor in order to produce the intermediates (polyester acrylate/urethane solutions), diluted with a solvent which is miscible with water but inert towards isocyanate groups and heated to relatively elevated temperatures, in particular in the range from 50° to 120°C. Suitable solvents are acetone, butanone, tetrahydrofuran, dioxane, acetonitrile and 1-methyl-2-pyrrolidone. Catalysts known to accelerate the isocyanate addition reaction may also be initially introduced, for example triethylamine, 1,4-diazabicyclo-2,2,2-octane, tin dioctoate or dibutyltin dilaurate. The polyisocyanate and/or polyisocyanates (C1) are added to these mixtures. The ratio of moles of all hydroxyl groups to moles of all isocyanate groups is generally between 0.3 and 0.95, in particular between 0.4 and 0.9.

Once the water-dilutable, ethylenically unsaturated polyurethane solutions have been produced from (A1), (B1), (C1) and (D1), the compound B1 centers having an anionic or cationic dispersant action undergo salt formation, unless this has already occurred in the starting molecules. In the case of anionic centers, bases such as ammonia, triethylamine, triethanolamine, potassium hydroxide or sodium carbonate may advantageously be used, while in the case of cationic centers, sulphuric acid dimethyl ester or succinic acid may advantageously be used. If compounds B1 having ether groups are used, the neutralization stage is omitted.

In the final reaction stage, in which an increase in molecular weight and the formation of the water-dilutable, ethylenically unsaturated polyurethane resins occur in the aqueous medium, the polyurethane solutions prepared from (A1), (B1), (C1) and (D1) are either vigorously stirred into the dispersion water containing the polyamine and/or polyamines (E1) or, conversely, the dispersion water/polyamine (E1) mixture is stirred into the polyester urethane solutions prepared from (A1), (B1), (C1) and (D1). Molecular weight is then increased by the reaction of the isocyanate groups still present in the reaction products prepared from (A1), (B1), (C1) and (D1) with the amine hydrogens. The dispersions according to the invention are also formed. The quantity of polyamine (E1) used is dependent upon the unreacted isocyanate groups which are still present.

If desired, the solvent may be removed by distillation. The dispersions then have a solids content of 20-60 wt. %, in particular of 30-55 wt. %.

External emulsifiers can additionally be added to stabilize the dispersions.

In various non-limiting embodiments, the polycarbonate-polyurethane resin component (b) of the aqueous polyurethane coating compositions disclosed herein may comprise a water-dilutable polycarbonate-polyurethane resin. As used herein, the term "polycarbonate-polyurethane resin" refers to oligomeric or polymeric macromolecules comprising carbonate groups and at least one of urethane groups or urea groups. Suitable polycarbonate-polyurethane resins include the aliphatic polycarbonate-polyurethane resin dispersions in water that are commercially available from Bayer MaterialScience, LLC, Pittsburgh, PA, USA, under the Bayhydrol® trademark.

A water-dilutable polycarbonate-polyurethane resin may comprise a reaction product of: (A1') a polyisocyanate component; (A2') a polycarbonate polyol component; and (A3') an isocyanate-reactive component comprising an ionic group or potentially ionic group.

In various non-limiting embodiments, the polyisocyanate component (A1') may comprise a monomeric organic diisocyanate represented by the formula, R(NCO)₂, in which R represents an organic group. In various non-limiting embodiments, R represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms, or a divalent aromatic hydrocarbon group having 6 to 15 carbon atoms.

Examples of suitable monomeric diisocyanates include, for example: 1,4-tetra-methylene diisocyanate; 1,6-hexamethylene diisocyanate; 1-methyl-2,4(2,6)-diisocyanatocyclohexane; 2,2,4-trimethyl-1,6-hexamethylene diisocyanate; 2,4,4-trimethyl-1,6-hexamethylene diisocyanate; 1,12-dodecamethylene diisocyanate; cyclohexane-1,3- diisocyanate; cyclohexane-1,4-diisocyanate; 1-isocyanato-2-isocyanatomethyl cyclopentane; 1-isocyanato-3-isocyanatomethyl-3,5,5-trimethyl-cyclohexane (isophorone diisocyanate), bis-(4-isocyanato-cyclohexyl)-methane; 1,3- and 1,4-bis-(isocyanatomethyl)-cyclohexane; bis-(4-isocyanatocyclo-hexyl)-methane; 2,4'-diisocyanato-dicyclohexyl methane; bis-(4-isocyanato-3-methyl-cyclohexyl)-methane; α,α,α',α'-tetramethyl-1,3- and/or -1,4-xylylene diisocyanate; 1-isocyanato-1-methyl-4(3)-isocyanatomethyl cyclohexane; 2,4- and/or 2,6-hexahydro-toluylene diisocyanate; 1,3- and/or 1,4-phenylene diisocyanate; 2,4- and/or 2,6-toluene diisocyanate; 2,2'-, 2,4'-, and/or 4,4'-diphenylmethane diisocyanate; naphthalene-1,5-diisocyanate; isomers of any thereof; and combinations of any thereof.

In various non-limiting embodiments, the polyisocyanate component may comprise a monomeric isocyanate comprising three or more isocyanate groups such as, for example, 4-isocyanatomethyl-1,8-octamethylene diisocyanate. The polyisocyanate component may comprise polyphenyl polymethylene polyisocyanates obtained by phosgenating aniline/formaldehyde condensates. The polyisocyanate component may also comprise aromatic isocyanates having three or more isocyanate groups, such as, for example, 4,4',4"-triphenylmethane triisocyanate.

The polyisocyanate component (A1') may also comprise diisocyanate adducts and/or oligomers comprising urethane groups, urea groups, uretdione groups, uretonimine groups, isocyanurate groups, iminooxadiazine dione groups, oxadiazine trione groups, carbodiimide groups, acyl urea groups, biuret groups, and/or allophanate groups. For example, the polyisocyanate component may include:
(1) Isocyanurate group-containing polyisocyanates that may be prepared as set forth in DE-PS 2,616,416; EP-OS 3,765; EP-OS 10,589; EP-OS 47,452; U.S. Patent No. 4,288,586; and U.S. Patent No. 4,324,879;
(2) Uretdione diisocyanates that may be prepared by oligomerizing a portion of the isocyanate groups of a diisocyanate in the presence of a suitable catalyst, *e.g.*, a trialkyl phosphine catalyst, and which may optionally be used in admixture with other isocyanates, particularly the isocyanurate group-containing polyisocyanates set forth under (1) above;
(3) Biuret group-containing polyisocyanates that may be prepared according to the processes disclosed in U.S. Patent. Nos. 3,124,605; 3,358,010; 3,644,490; 3,862,973; 3,906,126; 3,903,127; 4,051,165; 4,147,714; and 4,220,749, by using co-reactants such as water, tertiary alcohols, primary and secondary monoamines, and primary and/or secondary diamines;
(4) Iminooxadiazine dione and, optionally, isocyanurate group-containing polyisocyanates, that may be prepared in the presence of fluorine-containing catalysts as described in DE-A 19611849;
(5) Carbodiimide group-containing polyisocyanates that may be prepared by oligomerizing diisocyanates in the presence of carbodiimidization catalysts as described in DE-PS 1,092,007; U.S. Patent No. 3,152,162; and DE-OS 2,504,400, DE-OS 2,537,685, and DE-OS 2,552,350; and
(6) Polyisocyanates containing oxadiazinetrione groups, *e.g*., the reaction product of two moles of a diisocyanate and one mole of carbon dioxide.

Polyisocyanate components (A1') comprising diisocyanate adducts and/or oligomers may have an average isocyanate group functionality of 2 to 6 or 2 to 4, for example. Polyisocyanate components (A1') comprising diisocyanate adducts and oligomers may have an average isocyanate (NCO) content of 5% to 30%, 10% to 25%, or 15% to 25%, by weight of the component.

In various non-limiting embodiments, the polyisocyanate component (A1') may be a monomeric (cyclo)aliphatic diisocyanate such as, for example, a diisocyanate selected from the group consisting of 1,6-hexamethylene diisocyanate (HDI); 1-isocyanato-3-isocyanatomethyl-3,5,5-trimethylcyclohexane (isophorone diisocyanate or IPDI); 4,4'-diisocyanato-dicyclohexylmethane (H₁₂MDI); 1-methyl-2,4(2,6)-diisocyanatocyclohexane; isomers of any thereof; and combinations of any thereof. For example, in various non-limiting embodiments, H₁₂MDI may be used to produce (c) water-dilutable polycarbonate-polyurethane resin. In various non-limiting embodiments, the polyisocyanate component (A1') may comprise 50 to 100 weight percent of aliphatic diisocyanate and 0 to 50 weight percent of other aliphatic polyisocyanates having a molecular weight of 140 to 1500, such as, for example, diisocyanate adduct and/or oligomer.

In various non-limiting embodiments, a polyisocyanate component (A1') may comprise any one or more of the polyisocyanate components (C1) described above in connection with water-dilutable, ethylenically unsaturated polyurethane resins. For example, a polyisocyanate component (A1') may comprise at least one of HDI, IPDI, H₁₂MDI, 1-methyl-2,4(2,6)-diisocyanatocyclohexane, and/or adducts of these diisocyanates comprising isocyanurate, uretdione, biuret, and/or iminooxadiazine dione groups as described above.

In various non-limiting embodiments, a polycarbonate polyol component (A2') may comprise a polycondensation reaction product of polyhydric alcohols and phosgene or a polycondensation reaction product of polyhydric alcohols and diesters of carbonic acid. Suitable polyhydric alcohols include, for example, diols such as 1,3-propanediol; ethylene glycol; propylene glycol; 1,4-propanediol; diethylene glycol; triethylene glycol; tetraethylene glycol; 1,4-butanediol; 1,6-hexanediol; trimethylenepentanediol; 1,4-cyclohexanediol; 1,4-cyclohexanedimethanol; neopentyl glycol; 1,8-octanediol; and combinations of any thereof. Suitable polyhydric alcohols also include, for example, tri-functional and multi-functional hydroxyl compounds such as glycerol; trimethylolpropane; trimethylolethane; hexanetriol isomers; pentaerythritol; and combinations of any thereof. Tri-functional and multi-functional hydroxyl compounds may be used to produce a polycarbonate polyol having a branched structure.

A polycarbonate polyol may have an average hydroxyl functionality of 1 to 5, or any sub-range therein, such as, for example, 1 to 2, 1.5 to 2.5, 1.2 to 2.2, or 1.8 to 2.2. A polycarbonate polyol may have an average molecular weight of 300 to 10000 or any sub-range therein, such as, for example, 300 to 5000, 1000 to 8000, 1000 to 6000, 2000 to 6000, 500 to 6000, 500 to 3000, or 1000 to 3000. A polycarbonate polyol may have an OH number of 25 to 350 mg KOH/g solids.

In various non-limiting embodiments, an isocyanate-reactive component (A3') comprising an ionic group or potentially ionic group may comprise an ionic group or potentially ionic group may at least partially impart water-dilutability (*e.g*., aqueous solubility or aqueous dispersability) to water-dilutable polycarbonate-polyurethane resins by covalently incorporating into the macromolecules, increasing the hydrophilicity of the macromolecules. The isocyanate-reactive component (A3') may comprise at least one ionic group or potentially ionic group, which may be either cationic or anionic in nature. The isocyanate-reactive component (A3') may also comprise at least one isocyanate-reactive group such as, for example, a hydroxyl group and/or an amine group. The isocyanate-reactive functionality of the isocyanate-reactive component (A2') and the hydroxyl functionality of the polycarbonate polyol component (A2') may react with the isocyanate functionality of the polyisocyanate component (A1') to, at least in part, produce a water-dilutable polycarbonate-polyurethane resin.

Cationic and anionic isocyanate-reactive components (A3') include compounds comprising, for example, sulfonium groups, ammonium groups, phosphonium groups, carboxylate groups, sulfonate groups, phosphonate groups, or the corresponding non-ionic acid groups (*i.e*., potentially ionic groups) that can be converted by deprotonation (*i.e.*, salt formation) into these groups.

Suitable isocyanate-reactive components (A3') include, for example, mono-hydroxycarboxylic acids; di-hydroxycarboxylic acids; mono-aminocarboxylic acids; di-aminocarboxylic acids; mono-hydroxysulfonic acids; di-hydroxysulfonic acids; mono-aminosulfonic acids; di-aminosulfonic acids; mono-hydroxyphosphonic; di-hydroxyphosphonic acids; mono-aminophosphonic acids; di-aminophosphonic acids; their ionic salts; and combinations of any thereof.

Suitable isocyanate-reactive components (A3') include, for example, dimethylolpropionic acid; dimethylolbutyric acid; hydroxypivalic acid; N-(2-aminoethyl)-β-alanine; ethylenediame-propyl- or butyl-sulfonic acid; 1,2- or 1,3-propylenediamine-β-ethylsulfonic acid; citric acid; glycolic acid; lactic acid; 2-aminoethylaminoethanesulfonic acid; glycine; alanine; taurine; lysine; 3,5-diaminobenzoic acid; an adduct of isophorone diisocyanate (IPDI) and acrylic acid (see, *e.g*., European Patent No. 916,647) and its alkali metal and/or ammonium salts; an adduct of sodium bisulfite with but-2-ene-1,4-diol; polyethersulfonate; and the propoxylated adduct of 2-butenediol and NaHSO₃ (see, *e.g*., German Patent No. 2,446,440).

Likewise, suitable isocyanate-reactive components (A3') include, for example, other 2,2-bis(hydroxymethyl)alkane-carboxylic acids such as dimethylolacetic acid and 2,2-dimethylolpentanoic acid. In addition, suitable isocyanate-reactive components (A3') include dihydroxysuccinic acid, Michael adducts of acrylic acid with amines such as isophoronediamine or hexamethylenediamine, or mixtures of such acids and/or dimethylolpropionic acid and/or hydroxypivalic acid. Further, suitable isocyanate-reactive components (A3') include sulfonic acid diols optionally comprising ether groups, for example, the compounds described in U.S. Pat. No. 4,108,814.

In various non-limiting embodiments, the water- polycarbonate-polyurethane resin comprises a reaction product of components (A1'), (A2'), and an isocyanate-reactive component (A3') possessing carboxyl or carboxylate groups, sulfonic acid or sulfonate groups, and/or ammonium groups. The isocyanate-reactive component (A3') may be incorporated into water-dilutable polycarbonate-polyurethane resin macromolecules by urethane-forming and/or urea-forming reactions between the isocyanate-reactive groups and the isocyanate groups of the polyisocyanate component (A1').

In various non-limiting embodiments, an isocyanate-reactive component (A3') comprising an ionic group or potentially ionic group may comprise any one or more of the components (B1) described above in connection with water-dilutable, ethylenically unsaturated polyurethane resins. For example, an isocyanate-reactive component comprising an ionic group or potentially ionic group may comprise at least one of dimethylolpropionic acid; dimethylolbutyric acid; and/or hydroxypivalic acid.

In various non-limiting embodiments, an optional isocyanate-reactive component (A4') may comprise, for example, chain extenders and/or chain terminators. A chain-extending and/or chain-terminating component may comprise an ionic group or potentially ionic group and at least one group that is reactive with isocyanate groups in an addition reaction. Examples of chain-extending components include, for example, methylenediamine; ethylenediamine; propylenediamine; 1,4-butylenediamine; 1,6-hexamethylenediamine; 2-methyl-1,5-pentanediamine (Dytek-A from DuPont); 1-amino-3,3,5-trimethyl-5-aminomethyl cyclohexane (isophorone diamine); piperazine; 1,4-diaminocyclohexane; bis(4-aminocyclohexyl)methane; adipic acid dihydrazide; alkylene oxide diamines; dipropylamine diethyleneglycol; N-(2-aminoethyl)-2-aminoethane sulfonic acid (or salt thereof); N-(2-aminoethyl)-2-aminopropionic acid (or salt thereof); and combinations of any thereof.

Examples of chain-terminating components include, for example, compounds having the formula: 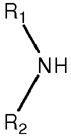 wherein R₁ is a hydrogen atom or alkyl radical, optionally having a hydroxyl end and R₂ is an alkyl radical, optionally having a hydroxyl end. Suitable chain-terminating compounds include compounds such as monoamines or monoalcohols. Examples include, but are not limited to, methylamine; ethylamine; propylamine; butylamine; octylamine; laurylamine; stearylamine; isononyloxy-propylamine; dimethylamine; diethylamine; dipropylamine; dibutylamine; N-methylaminopropylamine; diethyl(methyl)aminopropylamine; morpholine; piperidine; diethanolamine; and combinations of any thereof. Also suitable are chain terminating alcohols, such as, for example, C₁-C₁₀ or higher alcohols including, methanol, butanol, hexanol, 2-ethylhexyl alcohol, isodecyl alcohol, and the like, and mixtures thereof, as well as aminoalcohols, such as, for example, aminomethylpropanol (AMP).

A water-dilutable polycarbonate-polyurethane resin may be prepared by reacting components (A1') through (A4') using an acetone process or modification thereof. A description of suitable processes may be found, for example, in Methoden der Organischen Chemie, Houben-Weyl, 4th Edition, Volume E20/Part 2, p. 1682, Georg Thieme Verlag, Stuttgart, 1987.

A non-limiting example of an acetone process is described below. In a first stage an adduct comprising unreacted isocyanate groups is synthesized from a polyisocyanate component (A1'), a polycarbonate polyol component (A2'), and an isocyanate-reactive component (A3') comprising an ionic group or potentially ionic group. In a second stage, the adduct is dissolved in an organic, at least partially water-miscible, solvent comprising no isocyanate-reactive groups. Suitable solvents include acetone; methylethyl ketone (MEK); 2-butanone; tetrahydrofuran; dioxin; and combinations of any thereof. In a third stage, the unreacted isocyanate-containing adduct solution is reacted with mixtures of amino-functional chain-extenders and/or chain-terminators. An amino-functional chain-extender may comprise a sulfonic acid group or carboxyl group (in either nonionic acid form or ionic salt form). In a fourth stage, the water-dilutable polycarbonate-polyurethane resin product is dispersed in the form of a fine-particle dispersion by addition of water to the organic solution or by addition of the organic solution to water. In a fifth stage, the organic solvent is partially or wholly removed by distillation, optionally under reduced pressure.

A water-dilutable polycarbonate-polyurethane resin may be characterized by a glass transition temperature of between -60ºC and 0ºC, such as, for example, between -40ºC and -20ºC. A dispersion of a water-dilutable polycarbonate-polyurethane resin may have a viscosity at 25ºC of less than 1000 mPa•s or less than 500 mPa•s, for example, between 50 and 1000 mPa•s or 50 and 500 mPa•s. A water-dilutable polycarbonate-polyurethane resin may have a number average molecular weight range of 500 to 6000.

In various non-limiting embodiments, the one-component free-radical curable aqueous polyurethane coating compositions disclosed herein may be formulated by blending a water-dilutable, ethylenically unsaturated polyurethane resin component (a) and a polycarbonate-polyurethane resin component.

In various non-limiting embodiments, the polycarbonate-polyurethane resin component (b) is non-functional. As used herein, the term "non-functional," with respect to a chemical component of the one-component free-radical curable aqueous polyurethane coating compositions disclosed herein, refers to a substantial lack of chemical reactivity with water-dilutable, ethylenically unsaturated polyurethane resin components (a). For example, a non-functional polycarbonate-polyurethane resin component (b) does not chemically react with components (a) and/or (b) of the coating composition during radiation curing. In this manner, a non-functional polycarbonate-polyurethane resin component (b) is substantially free of unreacted isocyanate groups, unreacted hydroxyl groups, isocyanate-reactive groups, hydroxyl-reactive groups, (meth)acrylic groups and other functional groups that may be reactive with any functional groups comprising water-dilutable, ethylenically unsaturated polyurethane resin components (a).

The one-component free-radical curable aqueous polyurethane coating compositions disclosed herein may be produced by blending water-dilutable, ethylenically unsaturated polyurethane resin component (a) and water-dilutable polycarbonate-polyurethane resin component (b). These components may be blended in aqueous dispersion, aqueous solution, or a combination of aqueous dispersion and aqueous solution, optionally with emulsifiers, dispersants, surfactants, co-solvents, and/or the like. For instance, water-dilutable, ethylenically unsaturated polyurethane resin component (a) and water-dilutable polycarbonate-polyurethane resin component (b) may be provided as separate aqueous dispersions, aqueous solutions, and/or dispersion/solutions in water-miscible solvents, which are combined together to create an aqueous mixture of components (a), and (b). It is also possible to mix any combination of the components (a), and (b) in anhydrous form, or as a solution/dispersion in a non-aqueous water-miscible solvent, and then disperse the mixture of components (a), and/or (b) in water.

In various non-limiting embodiments, the weight ratio on a solids basis of the water dilutable ethylenically unsaturated polyurethane resin component (a) the water dilutable polycarbonate-polyurethane resin component (b) is between 90:10 and 50:50.

In various non-limiting embodiments, one-component free-radical curable aqueous polyurethane coating compositions comprising a water-dilutable, ethylenically unsaturated polyurethane resin component (a) and a polycarbonate-polyurethane resin component (b) may comprise optional components such as, for example, additional water-dilutable resin components based on polymeric polyols. Additional water-dilutable resin components based on polymeric polyols may include, for example, polyether polyols, polyester polyols, polyepoxide polyols, polylactone polyols, polyacrylate polyols, polycarbonate polyols, and combinations of any thereof. Additional water-dilutable resin components may be formulated in admixture in aqueous solution and/or aqueous dispersion with the resin components (a), and (b).

In various non-limiting embodiments, one-component free radical curable aqueous polyurethane coating compositions comprising a water dilutable ethylenically unsaturated polyurethane resin component (a) and a polycarbonate-polyurethane resin component (b) maybe dried and/or radiation cured by any suitable means known to those skilled in the art such as, for example, exposing to high intensity UV radiation through 400 Watt Fusion UV Hg lamps.

In various non-limiting embodiments, one-component free radical curable aqueous polyurethane coating compositions comprising a water dilutable ethylenically unsaturated polyurethane resin component (a) and a polycarbonate-polyurethane resin component (b) may be dried and/or thermally cured by any suitable means known to those skilled in the art such as, for example, air drying, accelerated drying by exposure to heat, and thermal curing by exposure to heat. For example, in various non-limiting embodiments, one-component thermally-curable aqueous polyurethane coating compositions comprising a water dilutable ethylenically unsaturated polyurethane resin component (a) and a polycarbonate-polyurethane resin component (b) may be thermally cured by exposure to temperatures of 100°C to 250°C for 15 minutes to 60 minutes.

Once the water has evaporated, the water-dilutable, ethylenically unsaturated polyurethane resins according to the invention yield, even without the addition of auxiliary substances, physically drying coatings which may be exposed to elevated mechanical loads. In particular, the coatings are distinguished by their sandability. When subsequently crosslinked by radiation and/or free radical means, the films cure to yield particularly high quality, scratch resistant and chemical resistant lacquer coatings.

In the case of radiation-induced polymerization (UV or electron beam), UV curing is particularly preferred. UV curing is initiated in the presence of photoinitiators. Suitable photoinitiators include, for example, aromatic ketone compounds, such as benzophenones, alkylbenzophenones, Michler's ketone, anthrone and halogenated benzophenones. Further suitable compounds include, for example, 2,4,6-trimethylbenzoyldiphenylphosphine oxide, phenylglyoxylic acid esters, anthraquinone and the derivatives thereof, benzil ketals and hydroxyalkylphenones. Illustrative of additional suitable photoinitiators include 2,2-diethoxyacetophenone; 2- or 3- or 4-bromoacetophenone; 3- or 4-allyl-acetophenone; 2-acetonaphthone; benzaldehyde; benzoin; the alkyl benzoin ethers; benzophenone; benzoquinone; 1-chloroanthraquinone; p-diacetyl-benzene; 9,10-dibromoanthracene 9,10-dichloroanthracene; 4,4-dichlorobenzophenone; thioxanthone; isopropyl-thioxanthone; methylthioxanthone; α,α,α-trichloro-para-t-butyl acetophenone; 4-methoxybenzophenone; 3-chloro-8-nonylxanthone; 3-iodo-7-methoxyxanthone; carbazole; 4-chloro-4'-benzylbenzophenone; fluoroene; fluoroenone; 1,4-naphthylphenylketone; 1,3-pentanedione; 2,2-di-sec.-butoxy acetophenone; dimethoxyphenyl acetophenone; propiophenone; isopropylthioxanthone; chlorothioxanthone; xanthone; maleimides and their derivatives ; and mixtures thereof. There are several suitable photoinitiators commercially available from Ciba including Irgacure® 184 (1-hydroxy-cyclohexyl-phenyl-ketone), Irgacure® 819 (bis(2,4,6-trimethylbenzoyl)-phenylphosphineoxide), Irgacure® 1850 (a 50/50 mixture of bis(2,6-dimethoxybenzoyl)-2,4,4-trimethylpentyl-phosphine oxide and 1-hydroxy-cyclohexyl-phenyl-ketone), Irgacure® 1700 (a 25/75 mixture of bis(2,6-dimethoxybenzoyl)-2,4,4-trimethylpentyl-phosphine oxide and 2-hydroxy-2-methyl-1-phenyl-propan-1-one), Irgacure® 907 (2-methyl-1[4-(methylthio)phenyl]-2-morpholonopropan-1-one), Darocur MBF (a phenyl glyoxylic acid methyl ester), Irgacure® 2022 Photoinitiator blend (20% by weight of phenylbis(2,3,6-trimethyl benzoyl)phosphine oxide and 80% by weight of 2-hydroxy-2-methyl-1-phenyl-1-propanone) and Darocur 4265 (a 50/50 mixture of bis(2,4,6-trimethylbenzoyl)-phenylphosphineoxide and 2-hydroxy-2-methyl-1-phenyl-propan-1-one). Mixtures of the foregoing photoinitiators may also be used. The foregoing lists are meant to be illustrative only and are not meant to exclude any suitable photoinitiators.

Those skilled in the art of photochemistry are fully aware that photoactivators can be used in combination with the aforementioned photoinitiators and that synergistic effects are sometimes achieved when such combinations are used. Photoactivators are well known in the art and require no further description to make known what they are and the concentrations at which they are effective. Nonetheless, one can mention as illustrative of suitable photoactivators, methylamine, tributylamine, methyldiethanolamine, 2-aminoethylethanolamine, allylamine, cyclohexylamine, cyclopentadienylamine, diphenylamine, ditolylamine, trixylylamine, tribenzylamine, n-cyclohexylethyleneimine, piperidine, N-methylpiperazine, 2,2-dimethyl-1,3-bis(3-N-morpholinyl)-propionyloxypropane, and mixtures thereof.

The radiation can be provided by any suitable source such as UV lamps having with or reduced infrared emission or UV lamps fitted with filters to eliminate infrared emissions or so-called LEDs (light-emitting devices) emitting radiation in the wavelength noted. Particularly useful commercially available devices include: the Fusion and Nordson high-intensity microwave powered lamps (mercury, iron doped and gallium doped lamps), high-intensity standard arc lamps, the Panacol UV H-254 lamp (available from Panacol-Elosol GmbH) - a 250 W ozone-free, iron doped metal halide lamp with spectral wavelength of from 320 to 450nm; Panacol UVF-450 (320 nm to 450 nm depending on the black, blue or clear filter used); Honle UVA HAND 250 CUL (available from Honle UV America Inc.) - emitting maximum intensity UVA range of -320 to 390 nm; PMP 250 watt metal halide lamp (available from Pro Motor Car Products Inc.); Cure-Tek UVA-400 (available from H&S Autoshot) which has a 400-watt metal halide bulb and the lamp assembly can be fitted with different filters like blue, light blue or clear to control/eliminate the infra-red radiation from the lamp source); Con-Trol-Cure Scarab-250 UV-A shop lamp system (available from UV Process Supply Inc. - has a 250W iron doped metal halide lamp with a spectral wavelength output of 320 to 450 nm); Con-Trol-Cure - UV LED Cure-All 415 (available from UV Process Supply Inc. - spectral wavelength of 415 nm with a 2.5 to 7.95 W operating wattage range); Con-Trol-Cure - UV LED Cure-All 390 (available from UV Process Supply Inc. - spectral wavelength of 390 nm with a 2.76 to 9.28 W operating wattage range); UV H253 UV lamp (available from UV Light Technologies - the unit contained a 250W iron doped metal halide lamp fitted with a black glass filter to produce a spectral wavelength of between 300 and 400 nm); Radion RX10 module curing using solid state high intensity UV light source from Phoseon Technology; Low intensity microwave UV System Model QUANT-18/36 (available from Quantum Technologies - UV Intensity range: 3-30 mW/cm2; UV Spectral range: 330-390nm); WorkLED (available from Inretech Technologies using 400nm LED arrays); Flashlight MC with 20xLED adapter (available from Inretech Technologies using 400 nm LEDs); and Phillips TL03 lamp with radiation output above 380nm; and sunlight.

If curing proceeds by free radical means, water-soluble peroxides or aqueous emulsions of non-water soluble initiators are suitable. These free radical formers may be combined with accelerators in a manner known *per se.*

The one-component free-radical curable aqueous polyurethane coating compositions disclosed herein may produce cured coating films that exhibit microhardness values of no greater than 75 N/mm² (Martens/Universal Hardness). In various non-limiting embodiments, the one-component free-radical curable aqueous polyurethane coating compositions disclosed herein may produce cured coating films that exhibit microhardness values of no greater than 75 N/mm², 65 N/mm², 55 N/mm², 50 N/mm², 45 N/mm², 35 N/mm², 25 N/mm², 20 N/mm², or 5 N/mm².

In various non-limiting embodiments, the one-component free-radical curable aqueous polyurethane coating compositions disclosed herein may produce cured coating films that exhibit impact strength values of at least (or greater than) 60 in-lbs (direct and/or reverse, determined according to ASTM D2794 - 93 (2010): *Standard Test Method for Resistance of Organic Coatings to the Effects of Rapid Deformation (Impact)*)*.* In various non-limiting embodiments, the one-component free-radical curable aqueous polyurethane coating compositions disclosed herein may produce cured coating films that exhibit impact strength values of at least (or greater than) 100 in-lbs, 120 in-lbs, 140 in-lbs, or 160 in-lbs.

In various non-limiting embodiments, the one-component free-radical curable aqueous polyurethane coating compositions disclosed herein may also comprise silane-functional adhesion promoters such as, for example, the adhesion promoters disclosed in U.S. Patent No. 6, 403,175. Suitable adhesion promoters include, for example, γ-mercaptopropyltrimethoxysilane; 3-aminopropyl-triethoxysilane; 3-aminopropylsilane hydrolysate; 3-g+ycidyloxypropyl-triethoxysilane, γ-methacryloxypropyltrimethoxy silane, vinyltrimethoxy silane, and combinations of any thereof.

The one-component free-radical curable aqueous polyurethane coating compositions disclosed herein may be applied to substrates using any suitable methods, such as, for example, spraying; knife coating; curtain coating; vacuum coating; rolling; pouring; dipping; spin coating; squeegeeing; brushing; squirting; screen printing; gravure printing; flexographic printing; or offset printing. Suitable substrates include, for example, glass; wood; metal; paper; leather; textiles; felt; concrete; masonry; ceramic; stone; and plastics such as, for example, moldings and films of ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, and UP (abbreviations according to DIN 7728T1). The one-component free-radical curable aqueous polyurethane coating compositions disclosed herein may be applied to substrates comprising combinations of the above materials. The one-component free-radical curable aqueous polyurethane coating compositions disclosed herein may also be applied as undercoatings or overcoatings with other coatings. The one-component free-radical curable aqueous polyurethane coating compositions disclosed herein may also be applied to a temporary substrate support, dried and/or cured partly or fully, and detached from the substrate support to produce free films, for example.

In various non-limiting embodiments, the one-component free-radical curable aqueous polyurethane coating compositions disclosed herein may be especially suitable for glass substrates, such as, for example, flat glass, glass panels, and glass containers such as glass jars or glass bottles. Further, the one-component free-radical curable aqueous polyurethane coating compositions disclosed herein provide marring resistance and durability, which may be advantageous, for example, during glass container filling operations. Glass substrates comprising the one-component free radically-curable aqueous polyurethane coating compositions disclosed herein may be characterized by good hand feel. The one-component free radically-curable aqueous polyurethane coating compositions disclosed herein may be applied to glass substrates with or without hot end coating, with or without cold end coating, or both; and with or without a silane pre-treatment of the glass substrates.

The one-component free radically-curable aqueous polyurethane coating compositions disclosed herein may provide design freedom to manufacture transparent, pigmented, high gloss, matte, and frosted looks on glass substrates. Suitable representative pigments that may be formulated into the one-component free radically-curable aqueous polyurethane coating compositions disclosed herein include, for example, rutile and anatase titanium dioxide, yellow and red iron oxides, green and blue copper phthalocyanine, carbon blacks, leafing and nonleafing aluminum, barium sulfate, calcium carbonate, sodium silicate, magnesium silicate, zinc oxide, antimony oxide, di-arylide yellow, monoarylide yellow, nickel arylide yellow, benzimidazolone oranges, naphthol reds, quinacridone reds, pearlescent pigments (*e.g*., mica platelets), bronze platelets, nickel platelets, stainless steel platelets, micronized matting agents (*e.g*., methylenediamino-methylether-polycondensate), and combinations of any thereof.

The one-component free radically-curable aqueous polyurethane coating compositions disclosed herein may be applied over a label (e.g. pressure-sensitive labels, UV-activated labels, heat transfer labels, and the like) or over a decorative organic and/or inorganic coating that has previously been applied to a glass substrate. Suitable decorative organic coatings that may be used with the one-component free radically-curable aqueous polyurethane coating compositions disclosed herein include, for example, EcoBrite Organic Ink (PPG Industries, Inc., Pittsburgh, PA, USA) and SpecTruLite (Ferro Corporation, Cleveland, OH, USA).

A primer treatment may be applied to a glass substrate before application of a one-component free radically-curable aqueous polyurethane coating composition as disclosed herein. The primer treatment may be any coating that provides lubrication to protect a glass substrate between the time of manufacture and the time of application of the coating and/or improves the adhesion of the coating to the glass substrate. A primer treatment may comprise both a hot end coating and a cold end coating. A glass substrate may not have a hot end coating, such that a primer treatment comprises a cold end coating applied only after the substrate has been substantially cooled. A primer treatment may comprise a cold end coating, the cold end coating comprising a diluted silane composition or mixture of a silane composition and a surface-treatment composition. Any silane composition suitable for use as a primer on a glass substrate may be used in a primer coating, non-limiting examples of which include monoalkoxy-silanes, dialkoxysilanes, trialkoxysilanes, and tetralkoxysilanes.

A surface-treatment composition may comprise polyethylene compositions, stearate compositions, or mixtures thereof, which do not require removal before the application of further coatings to the glass substrates. Stearate compositions may comprise the salts and esters of stearic acid (octadecanoic acid), such as, for example, a T5 stearate coating (Tegoglas, Arkema, Philadelphia, PA, USA). A primer coating may be in the form of an aqueous solution, dispersion, or emulsion. For example, a surface-treatment composition may comprise a polyethylene emulsion such as Duracote, Sun Chemical. A primer treatment also may comprise additional compositions to improve subsequently applied coatings, non-limiting examples of which include surfactants and lubricants.

In various non-limiting embodiments, the one-component free radically-curable aqueous polyurethane coating compositions disclosed herein may function as a primer coating and a topcoating, providing sufficient lubricity, mar resistance, and toughness for line processing of glass containers.

The non-limiting and non-exhaustive examples that follow are intended to further describe various non-limiting and non-exhaustive embodiments without restricting the scope of the embodiments described in this specification. In the following examples, all parts and percentages are by weight, unless otherwise indicated.

### EXAMPLES

One-component free radical curable aqueous polyurethane coating compositions comprising a polyester urethane acrylate resin, and a polycarbonate-polyurethane resin were prepared as follows. Aqueous dispersions of a polyester urethane acrylate resin were prepared as described in U.S. Patent No.5,684,081. Bayhydrol® XP 2637 is an anionic aqueous dispersion of an aliphatic polycarbonate-polyurethane resin provided at 38-42% solids content in water without any co-solvent. Polyester urethane acrylate resin dispersion and polycarbonate polyurethane resin dispersion were mixed at different ratios as seen in Table 1.

Byk 028 (Byk Chemie), Irgacure 500 (BASF Corporation),Dowanol PnB (Dow) and water were added with continuous stirring to the aqueous mixtures of the polyester urethane acrylate resin, and the polycarbonate-polyurethane resin. The resulting mixtures were agitated using a mechanical mixer until homogeneous mixtures were obtained. The homogeneous mixtures were deaerated and stored overnight before use. The mixtures were prepared according to the formulations provided in Tables 1 (parts by weight, solvent weight included).

Silane pretreatment solution was prepared as follows. 10 g of Silquest A-174 (Momentive Performance Materials, Albany, NY, USA), 10 mL of 1N acetic acid (Fischer Scientific), 1 g of Byk 348 (Byk Chemie) and 1000 g of water were mixed until a homogeneous mixture was obtained. Air side of glass panels were pretreated with silane pretreatment solution by dipping the glass panels into the silane pretreatment solution. The panels were cured at 100 °C for 20 minutes.

**Table 1**

| **Formulations** | | | | | | | |
|---|---|---|---|---|---|---|---|
| | A | B | C | D | E | F | G |
| polyester urethane acrylate resin dispersion | 83.61 | 79.43 | 75.25 | 62.71 | 41.81 | 20.90 | 4.18 |
| polycarbonate-polyurethane resin dispersion | 0.00 | 4.18 | 8.36 | 20.90 | 41.81 | 62.71 | 79.43 |
| Byk 028 (defoamer) | 0.25 | 0.25 | 0.25 | 0.25 | 0.25 | 0.25 | 0.25 |
| Irgacure 500 (photointiator) | 0.84 | 0.79 | 0.75 | 0.63 | 0.42 | 0.21 | 0.05 |
| Dowanol PnB (cosolvent) | 2.51 | 2.51 | 2.51 | 2.51 | 2.51 | 2.51 | 2.51 |
| Water | 12.79 | 12.84 | 12.88 | 13.00 | 13.20 | 13.39 | 13.55 |

| **Binder Resin Component Weight Ratios** | | | | | | | |
|---|---|---|---|---|---|---|---|
| polyester urethane acrylate resin/ polycarbonate polyurethane resin (wt/wt on solids) | 100/0 | 95/5 | 90/10 | 75/25 | 50/50 | 25/75 | 5/95 |

| **Coating Properties** | | | | | | | |
|---|---|---|---|---|---|---|---|
| Direct Impact (in-lbs) | 100 | 100 | 160 | 160 | 160 | 160 | 160 |
| Reverse Impact (in-lbs) | 60 | 100 | 140 | 160 | 160 | 160 | 160 |
| Microhardness (N/mm²) | 64 | 58 | 51 | 44 | 24 | 12 | 6 |
| Scribe adhesion | Pass | Pass | Pass | Pass | Pass | Pass | Pass |

The one-component free radical-curable aqueous polyurethane coating compositions were tested for impact resistance, microhardness, and adhesion. Coatings for impact resistance testing were applied onto Bonderite B1000 cold rolled steel panels using a number 50 wire wound rod. Coatings for microhardness testing were applied onto glass disks using an Eppendorf pipettor (80 microliters) and spread over the disks using the pipettor tip. Coatings for adhesion testing were applied onto previously silane pretreated 4-inch by 4-inch glass Taber panels using a number 50 wire wound rod.

The applied coatings were left at room temperature for 45 minutes for water to leave the system. Dried coatings were with Fusion UV equipment under Hg lamp at 20 feet/minute. The coatings applied to the glass disks for microhardness testing were allowed to air-dry under ambient conditions for about 120 minutes before the UV cure. All testing was performed 2 weeks after the applied coatings were removed cured under UV light. The film thicknesses of the cured coatings on the steel panels were measured using a Fischerscope MMS instrument according to ASTM D1186-93: Standard Test Methods for Nondestructive Measurement of Dry Film Thickness of Nonmagnetic Coatings Applied to a Ferrous Base*.* The film thicknesses ranged from 0.5 to 0.75 mils.

Impact resistance testing was performed according to ASTM D2794 - 93 (2010): Standard Test Method for Resistance of Organic Coatings to the Effects of Rapid Deformation (Impact)*.* Microhardness (Martens/Universal Hardness) testing was performed on a Fischerscope H100C instrument. Adhesion testing was performed according to ASTM D4060-95: Standard Test Method for Abrasion Resistance of Organic Coatings by the Taber Abraser*.* Scribe adhesion testing was performed on glass Taber panels. Two one-inch long scribes diagonal to each other were cut using a utility knife and the adhesion of the film to glass was inspected visually. If no film peeled from the substrate, the coating was marked as "pass".

The results of the impact resistance testing, microhardness testing, and scribe adhesion testing are presented in Tables 1. Formulations A through G showed that the microhardness of the coatings decreases as the polycarbonate polyurethane resin content increases. Increasing polycarbonate polyurethane resin content also correlated with increased impact strength, increased toughness, and increased flexibility.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. § 112, first paragraph, and 35 U.S.C. § 132(a).

## Claims

1. An aqueous polyurethane coating composition comprising:
(a) a water-dilutable free radically curable polyurethane resin comprising a reaction product of:
(A1) 40-90 wt. % of one or more acrylate prepolymers containing hydroxyl groups and having an OH content of 40-120 mg of KOH/g and
(B1) 0.1-20 wt. % of one or more mono- and/or difunctional compounds reactive towards isocyanate groups, which compounds contain groups which are cationic, anionic and/or have a dispersant action due to ether groups with (C1) 10-50 wt. % of one or more polyisocyanates
(D1) 0.0-30.0 Wt. % of one or more polyols together with a subsequent reaction with
(E1) 0.1-10 wt. % of one or more di- and/or polyamines, and
(b) a water-dilutable polycarbonate-polyurethane resin, wherein the polycarbonate-polyurethane resin is non-functional;
wherein components (a) and (b) are present in a weight ratio between 90:10 and 50:50 measured on a solids basis.

2. The aqueous polyurethane coating composition of claim 1, wherein the polycarbonate-polyurethane resin component (b) comprises a reaction product of:
(A1') a polyisocyanate;
(A2') a polycarbonate polyol; and
(A3') an isocyanate-reactive compound comprising at least one ionic group or potentially ionic group.

3. The aqueous polyurethane coating composition of claim 1, wherein the polycarbonate-polyurethane resin component (b) further comprises:
(A4') isocyanate-reactive chain extender and/or chain terminator.

4. The aqueous polyurethane coating composition of claim 1, wherein acrylate prepolymers containing hydroxyl groups (A1) are selected from the group consisting of polyester acrylate prepolymers, polyether acrylate prepolymers, or polycarbonate acrylate prepolymers containing hydroxyl groups.

5. The aqueous polyurethane coating composition of claim 1, wherein one or more mono- and/or difunctional compounds reactive towards isocyanate groups, which compounds contain groups which are cationic, anionic and/or have a dispersant action due to ether groups (B1) are selected from the group consisting of bis(hydroxymethyl)propionic acid, malic acid, glycolic acid, lactic acid, glycine, alanine, taurine, 2-aminoethylaminoethanesulphonic acid, polyethylene glycols and polypropylene glycols started on alcohols.

6. The aqueous polyurethane coating composition of claim 1, wherein the one or more polyisocyanates (C1) are selected from the group consisting of aromatic, araliphatic, aliphatic, cycloaliphatic polyisocyanates and mixtures thereof.

7. The aqueous polyurethane coating composition of claim 6, wherein the one or more polyisocyanates (C1) are selected from the group consisting of hexamethylene diisocyanate and isophorone diisocyanate.

8. The aqueous polyurethane coating composition of claim 1, wherein the one or more polyols (D1) are selected from the group consisting of propylene glycol, ethylene glycol, neopentyl glycol, 1,6-hexane diol, polyesterpolyols having an average OH-functionality of 1.8-2.2, polyetherpolyols having an average OH-functionality of 1.8-2.2, polycarbonatepolyols having an average OH-functionality of 1.8-2.2, ethanol and butanol.

9. The aqueous polyurethane coating composition of claim 1, wherein the one or more di- and/or polyamines (E1) are selected from the group consisting of ethylenediamine, 1,6-hexamethylenediamine, isophoronediamine, 1,3- and 1,4-phenylenediamine, 4,4'-diphenylmethanediamine, aminofunctional polyethylene oxide, polypropylene oxide, triethylenetetramine and hydrazine.

10. The aqueous polyurethane coating composition of claim 1, wherein the polyisocyanate (A1') is selected from the group consisting of monomeric organic diisocyanate, monomeric isocyanate comprising three or more isocyanate groups, and diisocyanate adducts and/or oligomers comprising urethane groups, urea groups, uretdione groups, uretonimine groups, isocyanurate groups, iminooxadiazine dione groups, oxadiazine trione groups, carbodiimide groups, acyl urea groups, biuret groups, and/or allophanate groups.

11. The aqueous polyurethane coating composition of claim 1, wherein the polycarbonate polyol (A2') is selected from the group consisting of a polycondensation reaction product of polyhydric alcohols and phosgene and a polycondensation reaction product of polyhydric alcohols and diesters of carbonic acid.

12. The aqueous polyurethane coating composition of claim 11, wherein the polyhydric alcohol is selected from the group consisting of 1,3-propanediol, ethylene glycol, propylene glycol, 1,4-propanediol, diethylene glycol, triethylene glycol, tetraethylene glycol, 1,4-butanediol, 1,6-hexanediol, trimethylenepentanediol, 1,4-cyclohexanediol, 1,4-cyclohexanedimethanol, neopentyl glycol, 1,8-octanediol, glycerol, trimethylolpropane, trimethylolethane, hexanetriol, pentaerythritol, and mixtures thereof.

13. A glass substrate coated with the aqueous polyurethane coating composition of claim 1.

14. A glass container coated with the aqueous polyurethane coating composition of claim 1.

15. A glass bottle coated with the aqueous polyurethane coating composition of claim 1.

16. A method of coating a glass substrate comprising 1) providing a glass substrate, 2) applying the aqueous polyurethane coating composition of claim 1 to at least a portion of the glass substrate and 3) exposing the aqueous polyurethane coating composition of claim 1 to a source of actinic radiation for a time sufficient to cure the aqueous polyurethane coating composition of claim 1.

## Patentansprüche

1. Wässrige Polyurethan-Beschichtungszusammensetzung, enthaltend:
(a) ein wasserverdünnbares radikalisch härtbares Polyurethanharz, umfassend ein Reaktionsprodukt von:
(A1) 40-90 Gew.-% eines oder mehrerer hydroxylgruppenhaltiger Acrylat-Prepolymere, die einen OH-Gehalt von 40-120 mg KOH/g aufweisen, und
(B1) 0,1-20 Gew.-% einer oder mehrerer mono- und/oder difunktioneller Verbindungen, die gegenüber Isocyanatgruppen reaktiv sind, wobei die Verbindungen Gruppen enthalten, die kationisch und/oder anionisch sind und/oder aufgrund von Ethergruppen eine dispergierende Wirkung aufweisen, mit
(C1) 10-50 Gew.-% eines oder mehrerer Polyisocyanate,
(D1) 0,0-30,0 Gew.-% eines oder mehrerer Polyole zusammen mit einer nachfolgenden Reaktion mit
(E1) 0,1-10 Gew.-% eines oder mehrerer Di- und/oder Polyamine, und
(b) ein wasserverdünnbares Polycarbonat-Polyurethan-Harz, wobei das Polycarbonat-Polyurethan-Harz nichtfunktionell ist;
wobei die Komponenten (a) und (b) in einem Gewichtsverhältnis zwischen 90:10 und 50:50, gemessen auf Feststoffbasis, vorliegen.

2. Wässrige Polyurethan-Beschichtungszusammensetzung nach Anspruch 1, wobei die Polycarbonat-Polyurethan-Harz-Komponente (b) ein Reaktionsprodukt von
(A1') einem Polyisocyanat;
(A2') einem Polycarbonatpolyol und
(A3') einer isocyanatreaktiven Verbindung mit mindestens einer ionischen oder potentiell ionischen Gruppe
umfasst.

3. Wässrige Polyurethan-Beschichtungszusammensetzung nach Anspruch 1, wobei die Polycarbonat-Polyurethan-Harz-Komponente (b) ferner (A4')
ein isocyanatreaktives Kettenverlängerungsmittel und/oder Kettenabbruchmittel umfasst.

4. Wässrige Polyurethan-Beschichtungszusammensetzung nach Anspruch 1, wobei hydroxylgruppenhaltige Acrylat-Prepolymere (A1) aus der Gruppe bestehend aus hydroxylgruppenhaltigen Polyesteracrylat-Prepolymeren, Polyetheracrylat-Prepolymeren oder Polycarbonatacrylat-Prepolymeren ausgewählt sind.

5. Wässrige Polyurethan-Beschichtungszusammensetzung nach Anspruch 1, wobei eine oder mehrere mono- und/oder difunktionelle Verbindungen (B1), die gegenüber Isocyanatgruppen reaktiv sind, wobei die Verbindungen Gruppen enthalten, die kationisch und/oder anionisch sind und/oder aufgrund von Ethergruppen eine dispergierende Wirkung aufweisen, aus der Gruppe bestehend aus Bis-(hydroxymethyl)propionsäure, Apfelsäure, Glykolsäure, Milchsäure, Glycin, Alanin, Taurin, 2-Aminoethylaminoethansulfonsäure, Polyetheracrylat-Prepolymeren und an Alkoholen gestarteten Polypropylenglykolen ausgewählt sind.

6. Wässrige Polyurethan-Beschichtungszusammensetzung nach Anspruch 1, wobei das eine oder die mehreren Polyisocyanate (C1) aus der Gruppe bestehend aus aromatischen, arylaliphatischen, aliphatischen und cycloaliphatischen Polyisocyanaten und Mischungen davon ausgewählt sind.

7. Wässrige Polyurethan-Beschichtungszusammensetzung nach Anspruch 6, wobei das eine oder die mehreren Polyisocyanate (C1) aus der Gruppe bestehend aus Hexamethylendiisocyanat und Isophorondiisocyanat ausgewählt sind.

8. Wässrige Polyurethan-Beschichtungszusammensetzung nach Anspruch 1, wobei das eine oder die mehreren Polyole (D1) aus der Gruppe bestehend aus Propylenglykol, Ethylenglykol, Neopentylglykol, 1,6-Hexandiol, Polyesterpolyolen mit einer durchschnittlichen OH-Funktionalität von 1,8-2,2, Polyetherpolyolen mit einer durchschnittlichen OH-Funktionalität von 1,8-2,2, Polycarbonatpolyolen mit einer durchschnittlichen OH-Funktionalität von 1,8-2,2, Ethanol und Butanol ausgewählt sind.

9. Wässrige Polyurethan-Beschichtungszusammensetzung nach Anspruch 1, wobei das eine oder die mehreren Di- und/oder Polyamine (E1) aus der Gruppe bestehend aus Ethylendiamin, 1,6-Hexamethylendiamin, Isophorondiamin, 1,3- und 1,4-Phenylendiamin, 4,4'-Diphenylmethandiamin, aminofunktionellem Polyethylenoxid, Polypropylenoxid, Triethylentetramin und Hydrazin ausgewählt sind.

10. Wässrige Polyurethan-Beschichtungszusammensetzung nach Anspruch 1, wobei das Polyisocyanat (A1') aus der Gruppe bestehend aus monomerem organischem Diisocyanat, monomerem Isocyanat mit drei oder mehr Isocyanatgruppen und Diisocyanat-Addukten und/oder -Oligomeren mit Urethangruppen, Harnstoffgruppen, Uretdiongruppen, Uretonimingruppen, Isocyanatgruppen, Iminooxadiazindiongruppen, Oxadiazintriongruppen, Carbodiimidgruppen, Acylharnstoffgruppen, Biuretgruppen und/oder Allophanatgruppen ausgewählt ist.

11. Wässrige Polyurethan-Beschichtungszusammensetzung nach Anspruch 1, wobei das Polycarbonatpolyol (A2') aus der Gruppe bestehend aus einem Polykondensat von mehrwertigen Alkoholen und Phosgen und einem Polykondensat von mehrwertigen Alkoholen und Diestern von Kohlensäure ausgewählt ist.

12. Wässrige Polyurethan-Beschichtungszusammensetzung nach Anspruch 11, wobei der mehrwertige Alkohol aus der Gruppe bestehend aus 1,3-Propandiol, Ethylenglykol, Propylenglykol, 1,4-Propandiol, Diethylenglykol, Triethylenglykol, Tetraethylenglykol, 1,4-Butandiol, 1,6-Hexandiol, Trimethylenpentandiol, 1,4-Cyclohexandiol, 1,4-Cyclohexandimethanol, Neopentylglykol, 1,8-Octandiol, Glycerin, Trimethylolpropan, Trimethylolethan, Hexantriol, Pentaerythritol und Mischungen davon ausgewählt ist.

13. Glassubstrat, das mit der wässrigen Polyurethan-Beschichtungszusammensetzung nach Anspruch 1 beschichtet ist.

14. Glasbehälter, der mit der wässrigen Polyurethan-Beschichtungszusammensetzung nach Anspruch 1 beschichtet ist.

15. Glasflasche, die mit der wässrigen Polyurethan-Beschichtungszusammensetzung nach Anspruch 1 beschichtet ist.

16. Verfahren zum Beschichten eines Glassubstrats, bei dem man 1) ein Glassubstrat bereitstellt, 2) die wässrige Polyurethan-Beschichtungszusammensetzung nach Anspruch 1 auf mindestens einen Teil des Glassubstrats aufbringt und 3) die wässrige Polyurethan-Beschichtungszusammensetzung nach Anspruch 1 über einen zur Härtung der wässrigen Polyurethan-Beschichtungszusammensetzung nach Anspruch 1 ausreichenden Zeitraum mit einer Quelle von aktinischer Strahlung belichtet.

## Revendications

1. Composition aqueuse de revêtement à base de polyuréthane, comprenant :
(a) une résine de polyuréthane capable d'être diluée à l'eau et à durcissement radicalaire, comprenant un produit réactionnel de :
(A1) 40 à 90 % en poids d'un ou plusieurs prépolymères d'acrylates contenant des groupes hydroxyle et ayant une teneur en OH de 40 à 120 mg de KOH/g et
(B1) 0,1 à 20 % en poids d'un ou plusieurs composés monofonctionnels et/ou difonctionnels réactifs vis-à-vis des groupes isocyanate, lesdits composés contenant des groupes qui sont cationiques, anioniques et/ou ont une action de dispersion due à des groupes éther avec
(C1) 10 à 50 % en poids d'un ou plusieurs polyisocyanates
(D1) 0,0 à 30,0 % en poids d'un ou plusieurs polyols, avec une réaction ultérieure avec
(E1) 0,1 à 10 % en poids d'une ou plusieurs diamines et/ou polyamines, et
(b) une résine de polycarbonate-polyuréthane capable d'être diluée à l'eau, la résine de polycarbonate-polyuréthane étant non fonctionnelle ;
dans laquelle les constituants (a) et (b) sont présents selon un rapport pondéral en solides de 90:10 à 50:50.

2. Composition aqueuse de revêtement à base de polyuréthane selon la revendication 1, dans laquelle le constituant résine de polycarbonate-polyuréthane (b) comprend un produit réactionnel de :
(A1') un polyisocyanate ;
(A2') un polycarbonate polyol ; et
(A3') un composé réagissant avec les isocyanates comprenant au moins un groupe ionique ou groupe potentiellement ionique.

3. Composition aqueuse de revêtement à base de polyuréthane selon la revendication 1, dans laquelle le constituant résine de polycarbonate-polyuréthane (b) comprend en outre :
(A4') un agent d'extension de chaîne et/ou de terminaison de chaîne réagissant avec les isocyanates.

4. Composition aqueuse de revêtement à base de polyuréthane selon la revendication 1, dans laquelle les prépolymères d'acrylates contenant des groupes hydroxyle (A1) sont sélectionnés dans le groupe constitué de prépolymères de polyester-acrylate, de prépolymères de polyéther-acrylate, ou de prépolymères de polycarbonate-acrylate contenant des groupes hydroxyle.

5. Composition aqueuse de revêtement à base de polyuréthane selon la revendication 1, dans laquelle un ou plusieurs composés monofonctionnels et/ou difonctionnels réagissent avec les isocyanates, lesdits composés contiennent des groupes qui sont cationiques, anioniques et/ou ont une action de dispersion due à des groupes éther (B1) sont sélectionnés dans le groupe constitué de l'acide bis(hydroxyméthyl)propionique, de l'acide malique, de l'acide glycolique, de l'acide lactique, de la glycine, de l'alanine, de la taurine, de l'acide 2-aminoéthylaminoéthanesulfonique, de polyéthylènes glycols et de polypropylènes glycols dont les produits de départ sont des alcools.

6. Composition aqueuse de revêtement à base de polyuréthane selon la revendication 1, dans laquelle lesdits un ou plusieurs polyisocyanates (C1) sont sélectionnés dans le groupe constitué de polyisocyanates aromatiques, araliphatiques, aliphatiques, cycloaliphatiques, et de mélanges de ceux-ci.

7. Composition aqueuse de revêtement à base de polyuréthane selon la revendication 6, dans laquelle lesdits un ou plusieurs polyisocyanates (C1) sont sélectionnés dans le groupe constitué du diisocyanate d'hexaméthylène et du diisocyanate d'isophorone.

8. Composition aqueuse de revêtement à base de polyuréthane selon la revendication 1, dans laquelle lesdits un ou plusieurs polyols (D1) sont sélectionnés dans le groupe constitué du propylène glycol, de l'éthylène glycol, du néopentylglycol, du 1,6-hexanediol, de polyesters polyols ayant une fonctionnalité OH moyenne de 1,8 à 2,2, de polyéthers polyols ayant une fonctionnalité OH moyenne de 1,8 à 2,2, de polycarbonates polyols ayant une fonctionnalité OH moyenne de 1,8 à 2,2, de l'éthanol et du butanol.

9. Composition aqueuse de revêtement à base de polyuréthane selon la revendication 1, dans laquelle lesdites une ou plusieurs diamines et/ou polyamines (E1) sont sélectionnées dans le groupe constitué de l'éthylènediamine, de la 1,6-hexaméthylènediamine, de l'isophoronediamine, de la 1,3- phénylènediamine, de la 1,4-phénylènediamine, de la 4,4'-diphénylméthanediamine, de l'oxyde de polyéthylène à fonctionnalité amino, de l'oxyde de polypropylène, de la triéthylènetétramine et de l'hydrazine.

10. Composition aqueuse de revêtement à base de polyuréthane selon la revendication 1, dans laquelle le polyisocyanate (A1') est sélectionné dans le groupe constitué d'un diisocyanate organique monomère, d'un isocyanate monomère comprenant trois groupes isocyanate ou plus, et de composés d'addition de diisocyanates et/ou d'oligomères comprenant des groupes uréthane, des groupes urée, des groupes uretdione, des groupes urétonimine, des groupes isocyanurate, des groupes iminooxadiazinedione, des groupes oxadiazinetrione, des groupes carbodiimide, des groupes acylurée, des groupes biuret, et/ou des groupes allophanate.

11. Composition aqueuse de revêtement à base de polyuréthane selon la revendication 1, dans laquelle le polycarbonate polyol (A2') est sélectionné dans le groupe constitué d'un produit réactionnel de polycondensation d'alcools polyhydriques et de phosgène et d'un produit réactionnel de polycondensation d'alcools polyhydriques et de diesters d'acide carbonique.

12. Composition aqueuse de revêtement à base de polyuréthane selon la revendication 11, dans laquelle l'alcool polyhydrique est sélectionné dans le groupe constitué du 1,3-propanediol, de l'éthylène glycol, du propylène glycol, du 1,4-propanediol, du diéthylène glycol, du triéthylène glycol, du tétraéthylène glycol, du 1,4-butanediol, du 1,6-hexanediol, du triméthylènepentanediol, du 1,4-cyclohexanediol, du 1,4-cyclohexanediméthanol, du néopentylglycol, du 1,8-octanediol, du glycérol, du triméthylolpropane, du triméthyloléthane, de l'hexanetriol, et de mélanges de ceux-ci.

13. Substrat en verre revêtu de la composition aqueuse de revêtement à base de polyuréthane selon la revendication 1.

14. Récipient en verre revêtu de la composition aqueuse de revêtement à base de polyuréthane selon la revendication 1.

15. Bouteille en verre revêtue de la composition aqueuse de revêtement à base de polyuréthane selon la revendication 1.

16. Procédé de revêtement d'un substrat en verre, comprenant 1) la fourniture d'un substrat en verre, 2) l'application de la composition aqueuse de revêtement à base de polyuréthane selon la revendication 1 sur au moins une partie du substrat en verre, et 3) l'exposition de la composition aqueuse de revêtement à base de polyuréthane selon la revendication 1 à une source de rayonnement actinique pendant suffisamment de temps pour durcir la composition aqueuse de revêtement à base de polyuréthane selon la revendication 1.
